# EUROPEAN PATENT APPLICATION

(11) **EP 1 912 091 A1**
(43) Date of publication of application: **16.04.2008**
(21) Application number: 06425671.2
(22) Date of filing: 29.09.2006
(51) Int. Cl.: G02B 27/01

(54) **Head-up display system for motor-vehicles**

(71) Applicant: C.R.F. Società Consortile per Azioni, 10043 - Orbassano (Torino) (IT)
(72) Inventor: Repetto, Piermario, 10145 Torino (IT); Bernard, Stefano, 10043 Orbassano (Torino) (IT)
(74) Representative: Notaro, Giancarlo

(57) **Abstract**

In a head-up display system for motor vehicles, the image generated by a display (2) is focused by an image-formation system (5) into a virtual image, set at a pre-set distance from the driver of the motor vehicle. The beam of light leaving the image-formation system (5) is deviated towards an optical combiner (7) by an expansion and deviation system (6), which is shaped and set in such a way as to multiply the dimension in the direction normal to the road surface of the beam of light leaving the image-formation system (5). It is thus possible to guarantee an adequate extent of the region of space in which the driver can move his head without loosing perception of the image as a whole, notwithstanding the fact that the space occupied by the expansion and deviation system has a limited size in the direction normal to the road surface.

## Description

The present invention relates to head-up display systems for motor vehicles of the type comprising:
- a source of images;
- a system for image deviation and formation for focusing the image generated by said source in a virtual image set at a pre-set distance from the driver, at the same time deviating the rays of light generated by said source towards an expansion and reflection system;
- an expansion and reflection system for directing the rays of light leaving the system for image deviation and formation towards an optical combiner; and
- an optical combiner constituted by a transparent plate adjacent to the windscreen of the motor vehicle or constituted by the windscreen itself, designed to reflect towards the driver the rays of light coming from the expansion and reflection system.

The purpose of the present invention is to provide a head-up display system of the type referred to above that presents extremely small overall dimensions and in particular can be set within a space that is extremely small in the direction normal to the road surface, within a motor-vehicle dashboard.

A further purpose of the invention is to provide a system of the type referred to above that will be simple and inexpensive to produce, albeit guaranteeing efficiency and reliability of operation.

With a view to achieving said purposes, the subject of the invention is a head-up display system having the characteristics referred to at the start of the present description and further characterized in that the system for image deviation and formation is made up of at least one lens and at least one mirror, the latter being designed to deviate the optical path of the beam of rays of light from the direction normal to the road surface, upwards, to a direction substantially parallel to the direction of travel, and likewise characterized in that the expansion and reflection system is shaped and arranged so as to multiply the dimension of the beam of rays of light leaving the system for image deviation and formation in the direction of travel in such a way as to guarantee an adequate extent of the so-called "head-motion box" (hereinafter HMB), i.e., of the region of space in which the driver can move his head without loosing perception of the image presented as a whole, even when the system for image deviation and formation presents the optical element closest to said expansion and deviation system with a small dimension in the direction normal to the road surface. In particular, said expansion and reflection system enables the dimension of the HMB to be increased in the direction normal to the road surface.

Thanks to the aforesaid characteristics, the system according to the invention can be built so as to occupy an extremely small space, specifically in the direction normal to the road surface, within a motor-vehicle dashboard, without, however, jeopardizing, as compared to more cumbersome known devices, the extent of the aforesaid HMB.

In a preferred embodiment, the aforesaid source of images is made up of a display set, with reference to the condition where the device is installed on the motor vehicle, with its plane parallel to the road surface so as to emit a beam of light oriented substantially in a direction orthogonal to said plane, upwards. In said embodiment, the system for image deviation and formation is made up of:
- a single mirror inclined substantially by 45°, which deviates the optical path of the beam of rays of light from the direction normal to the road surface, upwards, to a direction substantially parallel to the direction of travel of the motor vehicle, forwards; and
- at least one lens, set either upstream or downstream of said single mirror, or else **???**a number of lenses each of which is set either upstream or downstream of said single mirror, said at least one lens or number of lenses being designed to focus, at a pre-set distance from the driver, a virtual image of the image formed by the display.

In another preferred embodiment, the aforesaid source of images is constituted by a display set, with reference to the condition where the device is installed on the motor vehicle, with its plane parallel to the direction of travel and normal to the road surface so as to emit a beam of light oriented substantially in a direction parallel to the road surface and orthogonal to the direction of travel. In said embodiment, the system for image deviation and formation is made up of:
- a first mirror inclined substantially by 45°, which deviates, in a direction substantially normal to the road surface, upwards, the beam of rays of light coming from a direction substantially parallel to the road surface and orthogonal to the direction of travel;
- a second mirror, likewise substantially inclined by 45°, which deviates the beam coming from the direction substantially normal to the road surface, upwards, to a direction substantially parallel to the direction of travel of the motor vehicle, forwards; and
- at least one lens set either upstream or downstream of said second mirror, or else a number of lenses, each of which is set either upstream or downstream of said second mirror, said at least one lens or number of lenses being designed to focus, at a pre-set distance from the driver, a virtual image of the image formed by the display.

In both of the aforesaid preferred embodiments, the beam of light leaving the system for image deviation and formation is oriented substantially in the direction of travel of the motor vehicle, towards the expansion and reflection system made up of a plurality of mirrors arranged behind one another in cascaded fashion along the optical path of the rays of light coming from the system for image deviation and formation, said mirrors being appropriately inclined in order to:
1. deviate said beam of light coming from said system for image deviation and formation in a direction substantially normal to the road surface and upwards, i.e., towards the optical combiner; and
2. guarantee for the driver substantial continuity of perception of the image projected within the entire HMB and substantial absence of double images.

In the aforesaid preferred embodiments, the beam of light leaving the system for image deviation and formation impinges upon the surface of the first mirror that forms the expansion and reflection system, said first mirror being close to said system for image deviation and formation, and is partially reflected towards the optical combiner, on account of the reflectance of said first mirror. The remaining part traverses said first mirror and impinges upon the surface of the subsequent mirror and is then reflected again towards said combiner according to the reflectance of said subsequent mirror, and so on until said beam of light impinges upon the surface of the mirror furthest away with respect to the system for image deviation and formation, which has a maximum reflectance and consequently deviates the residual portion of said beam of incident light, i.e., the portion of said beam of light that has not been reflected by the previous mirrors, completely towards said combiner.

The optical combiner reflects the beam of light coming from the system for image deviation and formation substantially in the direction of travel of the motor vehicle, towards the driver.

The arrangement of the mirrors making up the expansion and reflection system is such that the dimension measured in the direction of travel of the beam leaving said expansion and reflection system is multiplied N times with respect to the dimension measured in the direction normal to the road surface of the optical element of said system for image deviation and formation closest to said expansion and reflection system, where N corresponds to the number of mirrors making up said expansion and reflection system. Consequently, the beam of light directed towards the driver by the combiner has a dimension, measured in the direction normal to the road surface, that is N times the dimension measured in the direction normal to the road surface of said element of said system for image deviation and formation closest to said expansion and reflection system.

In the aforesaid preferred embodiment, said mirrors making up said expansion and reflection system all present different values of reflectance, namely, minimum for the mirror closest to the system for image deviation and formation and maximum for the mirror furthest away, in order to minimize within the HMB the gradient of brightness of the projected image. For example, in the case of a cascade of just two mirrors, if it is assumed that the reflectance of the second mirror, i.e., of the mirror further away with respect to said system for image deviation and formation, is 100%, the reflectance of the first mirror will be 50%. In the case of a cascade of three mirrors, if it is assumed that the reflectance of the third mirror, i.e., of the mirror furthest away with respect to said system for image deviation and formation, is 100%, the reflectance of the second mirror will be 50%, and the reflectance of the first will be 33%. In the case of four mirrors cascaded to one another, the values of reflectance from the first to the last mirror will be, respectively, 25%, 33%, 50% and 100%.

Thanks to the aforesaid arrangement, in the preferred embodiment of the invention, the components of the optical chain upstream of the combiner are contained within a theoretical volume of extremely small envelope, substantially shaped like an L turned upside down, with a branch extending prevalently in the direction normal to the road surface, containing the display and the system for image deviation and formation, and a branch extending prevalently in the direction of travel, in which the mirrors constituting the expansion and reflection system are located. The invention is consequently suited to being advantageously employed in those applications where the space available within the dashboard, above all in the direction normal to the road surface, is extremely small.

Further characteristics and advantages of the invention will emerge from the ensuing description with reference to the annexed plate of drawings, which is provided purely by way of non-limiting example and in which:
- Figure 1 is a schematic perspective view of a preferred embodiment of the system according to the invention; and
- Figure 2 is a schematic side view of a preferred embodiment of the system according to the invention.

With reference to the drawings, numbers 1 and 2 designate as a whole two embodiments of an image-display system of a "head-up" type, designed to be installed in the dashboard of a motor vehicle for displaying in front of the driver, at the height of the windscreen, images of various types, for example aid-to-driving information or information useful for navigation. In the drawings, the direction indicated by the arrow A is the direction parallel to the direction of travel of the motor vehicle, the arrow indicating the direction of advance. The vertical arrow Y indicates the direction of the motor vehicle normal to the road surface, and the arrow T indicates the transverse direction of the motor vehicle, normal to the previous one.

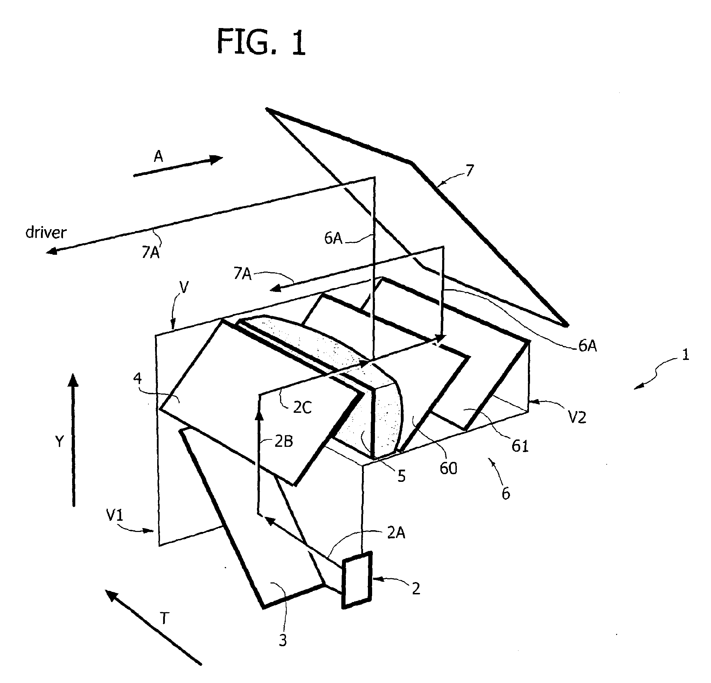

In a preferred embodiment (Figure 1), the device 1 comprises a source of images constituted by a display 2 of any known type, set with its plane parallel to the road surface. Consequently, the rays of light 2A leaving the display 2 are oriented substantially parallel to the direction normal to the road surface, upwards. In said preferred embodiment, the system for image deviation and formation 4, 5 is made up of:
- a deviator mirror 4, set with its plane parallel to the transverse direction T and inclined substantially by 45° with respect to the road surface, in such a way as to deviate the substantially vertical rays 2B substantially in the direction of travel A of the motor vehicle, forwards (see ray 2C); and
- at least one lens 5, set downstream of said mirror 4, designed to focus the image formed by said source of images 2 in a virtual image set at a pre-set distance from the driver.

In another preferred embodiment (not represented) said at least one lens 5 of said system for image deviation and formation is set upstream of said mirror 4.

In another preferred embodiment (not represented) said system for image deviation and formation comprises a deviator mirror 4 and a multiplicity of lenses 5, each of said lenses being set either upstream or downstream of said mirror 4.

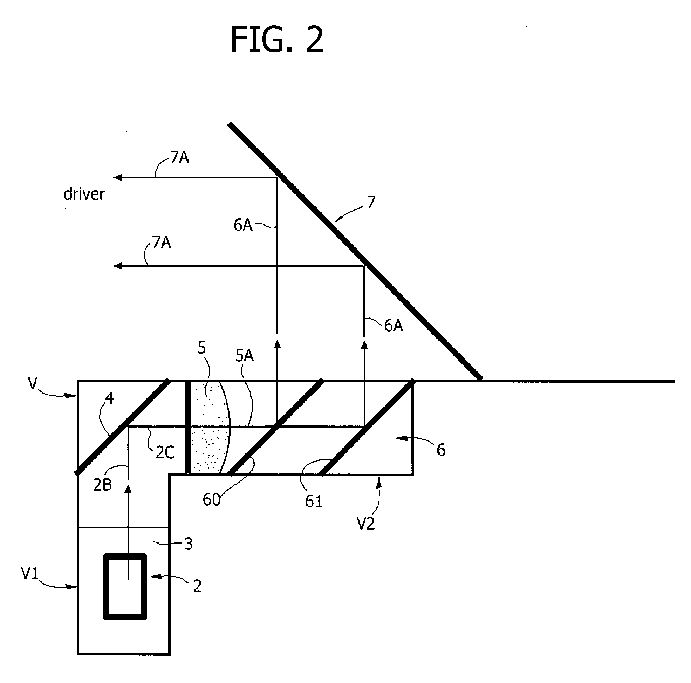

In another preferred embodiment (Figure 2) the device 1 comprises a source of images constituted by a display 2 of any known type, set with its plane normal to the road surface and to the transverse direction T. Consequently, the rays of light 2A leaving the display 2 are oriented substantially parallel to the transverse direction T. The system for image deviation and formation 3, 4, 5 is made up of:
- a first deviator mirror 3, set with its plane parallel to the direction of travel A and inclined substantially by 45° with respect to the road surface, which deviates in a direction substantially normal to the road surface, upwards, (see ray 2B) the beam of rays 2B coming from the direction parallel to the road surface and normal to the direction of travel A; and
- a second deviator mirror 4, set with its plane parallel to the transverse direction T and inclined substantially by 45° with respect to the road surface, which deviates in a direction substantially parallel to the direction of travel A, forwards, the beam of rays coming from the direction normal to the road surface (see ray 2C).

In a preferred embodiment (Figure 2) said system for image deviation and formation also comprises, together with said mirrors 3, 4, at least one lens, set upstream or downstream of said mirror 4.

In another preferred embodiment (not represented) said system for image deviation and formation also comprises, together with said mirrors 3, 4, a multiplicity of lenses, each of which is set upstream or downstream of said mirror 4.

Said lenses 5 forming part of the optical system for image deviation and formation are of any known type, for example, a single plane-convex lens 5 having a surface purposely calculated for reducing the optical aberrations or else a multiplicity of lenses 5 with surfaces optimized for reducing said optical aberrations, said lenses 5 being designed to focus the real image generated by the display 2 in a virtual image set at a pre-set distance from the driver.

The beams of light 5A focused by the optical system for image deviation and formation are oriented substantially in the direction of travel A of the motor vehicle, i.e., forwards. The beam of light 5A leaving the system for image deviation and formation 3, 4, 5 is deviated in a direction substantially normal to the road surface, upwards (see rays 6A in Figure 1), i.e., towards a combiner 7, by an expansion and reflection system 6. In the example illustrated, the expansion and reflection system 6 comprises a first mirror 60 that is partially reflecting (i.e., having both characteristics of reflectance and characteristics of transmittance) and a second mirror 61 that is totally reflecting, said mirrors being set behind one another in the direction A of the optical path of said beam of light 5A leaving the system for image deviation and formation 3, 4, 5: in this way, a portion of said beam of light 5A is deviated by the first mirror 60, whilst the remaining part is deviated by the second mirror 61.

Thanks to the arrangement described above, the beam of light 6A, which propagates in a direction substantially normal to the road surface, upwards, leaving the expansion and deviation system 6 has a dimension measured in the direction of travel A that is twice the dimension measured in the direction normal to the plane of travel of the optical element belonging to the system for image deviation and formation closest to said expansion and deviation system 6. The reflectances of the mirrors 60, 61 making up the expansion and deviation system 6 are such as to guarantee that the intensity of the light reflected by said mirrors 60, 61 is substantially the same. In ideal conditions, neglecting the effects due to absorption and considering a unit reflectance of the mirror 61, the mirror 60 would present a reflectance equal to 50%.

Of course, it is also possible to envisage more than two mirrors arranged behind one another for providing the expansion and reflection system 6, in which case only the mirror furthest away from the image-formation system will be totally reflecting, whilst the others will be partially reflecting, in such a way that the intensity of the light reflected by said multiplicity of mirrors 60, 61 is substantially the same.

As has been said, the inclination of said mirrors 60, 61 forming said expansion and deviation system 6 is such as to deviate said beam of light 5A leaving the system for image reflection and formation 5 in a direction substantially normal to the road surface, upwards, i.e., towards said combiner 7. In order to guarantee that the driver has a continuous perception within the entire HMB of the virtual image projected at the pre-set distance as well as the absence of double images, the inclination of said mirrors 60, 61 forming said expansion and deviation system 6 cannot be constant.

The beam of light 6A coming from the expansion and deviation system 6 and oriented in a direction substantially normal to the plane of travel, upwards, is reflected by a combiner 7 substantially in the direction of travel A of the motor vehicle and towards the driver (rays 7A in Figures 1, 2).

The combiner 7 is constituted by a plate made of transparent material with substantially plane surfaces, parallel to the transverse direction T and inclined with respect to the surface of travel by an angle α such as to enable the rays 7A reflected by said combiner 7 to reach the observer. In a first embodiment, said plate 7 presents, in a natural way, a reflectance of its own, which can be formalized by means of the known Fresnel formulas, and a consequent transmittance of its own. In a second preferred embodiment, said plate 7 has a coating made of a plurality of dielectric materials, designed to determine the total reflectance and transmittance of said combiner 7. In both of the aforesaid embodiments, the simultaneous partial reflection of the rays of light 6A coming from said expansion and deviation system 6 and partial transmission of the rays of light coming from the background behind said plate 7 enables, within the driver's field of vision, the image of the background to be combined with, i.e., superimposed on, the virtual image projected by the head-up device.

In a preferred embodiment, the transparent plate constituting the combiner 7, made, for example, of glass, PCB (polycarbonate), or PMMA (polymethylmethacrylate), has a cross section in the plane parallel to the direction of travel and normal to the road surface that is substantially wedge-shaped, with its two opposite faces convergent with respect to one another, in order to prevent formation of double images. Preferably, moreover, the combiner 7 is pre-arranged for varying the angle of inclination α via actuation systems of any type (for example, electric stepper motors or shape-memory actuators).

Alternatively, the combiner 7 is constituted by the windscreen itself of the motor vehicle, which, as in the previous case, and for the same purpose of preventing formation of double images, has a cross section in the plane parallel to the direction of travel and normal to the road surface that is substantially wedge-shaped.

In the preferred embodiment, the mirrors 3, 4 of the system for image reflection and formation 3, 4, 5 and the mirrors 60, 61 of the expansion and deviation system 6 are plane, and the combiner 7 is constituted by a plate of glass adjacent to the windscreen.

Thanks to the arrangement described above, the dimension in the direction normal to the road surface of the beam of light 7A directed towards the driver is N times the dimension of the element of the system for image reflection and formation 5 closest to the expansion and deviation system 6, where N is the number of mirrors making up the expansion and projection system 6. Likewise multiplied N times is the dimension measured in the direction normal to the road surface of the HMB, with respect to the dimension, measured in the direction normal to the road surface, of the element of the system for image reflection and formation 3, 4, 5 closest to the expansion and deviation system 6. To a first approximation, in fact, the dimensions of the HMB are determined by the dimensions of the last element of the optical chain upstream of said expansion and deviation optical system 6: the larger the dimensions of this latter element, the wider the HMB. In the optical system described, however, the need to provide a system with small overall dimensions sets severe limits upon the vertical dimension of the image-formation optical system. Whereas the dimension measured in the direction T of the HMB is guaranteed by an adequate extension in said direction of the system for image reflection and formation 3, 4, 5, and in particular of the element belonging to said system for image reflection and formation 3, 4, 5 closest to the expansion and deviation system 6, the required dimension of said HMB, measured in the direction normal to the road surface, is obtained via an operation of doubling (or in general of multiplication by N) performed by the N mirrors 60, 61 constituting the expansion and deviation system 6.

In a variant, the possible residual aberrations not corrected by the one or more lenses 5 belonging to the system for image reflection and formation 3, 4, 5 is compensated for by providing with aspherical profiles one or more of the mirrors 3, 4 making up the system for image reflection and formation and/or one or more of the mirrors 60, 61 forming the expansion and deviation system 6 and/or by providing means for performing a pre-distortion on the image presented by the source of images.

In another variant that regards the case where the combiner 7 is constituted by the windscreen itself of the motor vehicle, the optical distortion introduced by the reflection on the curved surface of said windscreen, together with the possible residual aberrations not corrected by the one or more lenses 5 belonging to the system for image reflection and formation 3, 4, 5 is compensated for by providing with aspherical profiles one or more of the mirrors 3, 4 making up the system for image reflection and formation and/or one or more of the mirrors 60, 61 forming the expansion and deviation system 6 and/or by providing means for performing a pre-distortion on the image presented by the source of images.

As is evident from the drawings, thanks to the characteristics described above, the components of the system constituting the optical chain upstream of the combiner 7 are contained in a theoretical volume V substantially shaped like an L turned upside down, with a part V1 extending prevalently in the direction normal to the road surface in which the display 2 and the system for image reflection and formation 3, 4, 5 are arranged, and a part V2 extending prevalently in the direction parallel to the direction of travel of the motor vehicle, set in which is the expansion and deviation system 6.

Of course, without prejudice to the principle of the invention, the details of construction and the embodiments may vary widely with respect to what is described and illustrated herein purely by way of example, without thereby departing from the scope of the present invention.

## Claims

1. A head-up display system for motor vehicles, comprising:
- a source of images (2);
- a system for image deviation and formation (3, 4, 5) for focusing the image generated by said source (2) in a virtual image set at a pre-set distance from the driver, at the same time deviating the beam of rays of light generated by said source (2) towards an expansion and reflection system (6);
- an expansion and reflection system (6) for directing the beam of rays of light leaving the system for image deviation and formation (3, 4, 5) towards a combiner (7); and
- a combiner (7) constituted by a transparent plate adjacent to the windscreen of the motor vehicle or constituted by the windscreen itself, designed to reflect the beam of rays of light coming from the expansion and reflection system (6) towards the driver, said display system being **characterized in that**:
- said system for image deviation and formation (3, 4, 5) is made up of at least one lens (5) and at least one mirror (4), said mirror (4) being designed to deviate the optical path of the beam of rays of light from the direction substantially normal to the road surface, upwards, to the direction substantially parallel to the direction of travel; and
- said expansion and reflection system 6 is shaped and arranged so as to multiply the dimension of the beam of rays of light leaving said system for image deviation and formation (3, 4, 5) in the direction of travel.

2. The display system according to Claim 1, **characterized in that**:
- the plane containing said source of images (2) is substantially parallel to the direction of travel and to the normal to the road surface; and
- said system for image reflection and formation (3, 4, 5) is made up of at least two mirrors, the first (3) being designed to deviate, in a direction substantially parallel to the normal to the road surface, the beam of rays of light coming from the direction substantially parallel to the road surface and normal to the direction of travel, the second (4) being designed to deviate, in a direction substantially parallel to the direction of travel, the beam of rays of light having a direction substantially normal to the road surface, upwards.

3. The display system according to any one of the preceding claims, **characterized in that** said expansion and deviation system (6) comprises a plurality of mirrors (60, 61) arranged behind one another in cascaded fashion in the direction of the optical path of the beam of light (5A) leaving the system for image reflection and formation, said plurality of mirrors (60, 61) all having both characteristics of reflectance and characteristics of transmittance, except for the mirror that is furthest away with respect to the system for image reflection and formation (5), which is totally reflecting.

4. The display system according to Claim 3, **characterized in that** the mirrors (60, 61) constituting the expansion and deviation system (6) have reflectances such as to guarantee that the intensity of the light reflected by each of them is substantially the same.

5. The display system according to Claim 3, **characterized in that** the mirrors (60, 61) constituting the expansion and deviation system (6) have inclinations such as to guarantee that the driver will perceive, in a substantially continuous way and without double images, the virtual image set at a pre-set distance generated by said image-formation optical system (5).

6. The display system according to Claim 3, **characterized in that** the system for image reflection and formation (5) is pre-arranged for emitting a beam of light substantially in the direction of travel (A) of the motor vehicle and **in that** the mirrors (60, 61) constituting the expansion and deviation system (6) are arranged parallel to a transverse direction (T) normal to the direction of travel of the motor vehicle and parallel to the road surface, said mirrors (60, 61) being inclined in such a way that they reflect the beam of light coming from the system for image reflection and formation (3, 4, 5) in a direction substantially normal to the road surface and upwards, in the direction of the combiner (7), in such a way that the beam of light (7A) leaving said combiner (7) and directed towards the driver presents a dimension measured in the direction normal to the road surface that is a multiple of the dimension, measured in the aforesaid direction, of the element of the system for image reflection and formation (3, 4, 5) closest to said expansion and deviation system (6).

7. The display system according to Claim 3, **characterized in that** the components of the system constituting the optical chain upstream of the combiner (7) are contained in a theoretical volume (V) substantially shaped like an L turned upside down, with a part (V1) extending prevalently in the direction normal to the road surface, in which the display (2) and the system for image reflection and formation (3, 4, 5) are arranged, and a part (V2) extending prevalently in the direction of travel of the motor vehicle, in which the expansion and deviation system (6) is set.

8. The display system according to Claim 3, **characterized in that** the combiner (7) is constituted by a plate of transparent material with a cross section in the plane normal to the road surface and parallel to the direction of travel of the motor vehicle that is substantially wedge-shaped, with two opposite faces convergent with respect to one another.

9. The display system according to Claim 3, **characterized in that** the combiner (7) is constituted by a transparent plate, with adjustable inclination, adjacent to the windscreen of the motor vehicle.

10. The display system according to Claim 3, in which the combiner (7) is constituted by the windscreen itself of the motor vehicle, **characterized in that** one or more of the mirrors (3, 4, 60, 61) forming part of the system for image reflection and formation (3, 4, 5) and of the expansion and deviation system (6) have aspherical profiles.

11. The display system according to Claim 3, in which the combiner (7) is constituted by the windscreen itself of the motor vehicle, **characterized in that** the system further comprises means for performing a pre-distortion of the image generated by the source (2).

12. The display system according to Claim 3, in which said system for image reflection and formation (3, 4, 5) is made up of: at least two mirrors, the first (3) being designed to deviate, in a direction substantially parallel to the normal to the road surface, the beam of rays of light coming from the direction substantially parallel to the road surface and normal to the direction of travel, the second (4) being designed to deviate, in a direction substantially parallel to the direction of travel, the beam of rays of light having a direction substantially normal to the road surface, upwards; and at least one lens (5) set either upstream or downstream of said second mirror (4).

13. The display system according to Claim 3, in which said system for image reflection and formation (3, 4, 5) is made up of: at least two mirrors, the first (3) being designed to deviate, in a direction substantially parallel to the normal to the road surface, the beam of rays of light coming from the direction substantially parallel to the road surface and normal to the direction of travel, the second (4) being designed to deviate, in a direction substantially parallel to the direction of travel, the beam of rays of light having a direction substantially normal to the road surface, upwards; and a plurality of lenses (5), each set either upstream or downstream of said second mirror (4).
